# FASCICULE DE BREVET EUROPEEN

(11) **EP 4 041 509 B1**
(45) Date de publication et mention de la délivrance du brevet: **15.01.2025**
(21) Numéro de dépôt: 20788787.8
(22) Date de dépôt: 08.10.2020
(51) Int. Cl.: B28B 1/00, B28B 11/04, E04G 21/04, B33Y 10/00, B33Y 80/00, B28B 23/02, C04B 28/02, C04B 28/04

(54) **FABRICATION ADDITIVE D'ELEMENTS DE CONSTRUCTION EN BETON**
GENERATIVE FERTIGUNG VON BETONBAUELEMENTEN
ADDITIVE MANUFACTURING OF CONCRETE CONSTRUCTION ELEMENTS

(30) Priorité: 09.10.2019 FR 1911181
(43) Date de publication de la demande: 17.08.2022
(73) Titulaire: Saint-Gobain Weber, 94370 Sucy-en-Brie (FR); SAINT-GOBAIN ISOVER, 92400 Courbevoie (FR)
(72) Inventeur: BEAUMONT, Julien, 75017 PARIS (FR); DUNAEVA, Elena, 75015 PARIS (FR); GILLES, Jérôme, 60300 MONT L'EVEQUE (FR)
(74) Mandataire: Saint-Gobain Recherche
(86) Numéro de dépôt international: PCT/EP2020/078294
(87) Numéro de publication internationale: WO 2021/069601

(56) Documents cités:
- WO-A1-2016/019434
- WO-A1-2016/019434
- FR-A1- 3 029 811
- FR-A1- 3 029 811
- KR-B1- 101 911 404
- KR-B1- 101 911 404

## Description

L'invention se rapporte au domaine de la construction. Elle concerne plus particulièrement la fabrication d'éléments de construction en béton par une technique de fabrication additive.

Egalement appelée « impression 3D », la fabrication additive est une méthode dans laquelle un robot contrôlé par ordinateur fabrique des objets tridimensionnels en déposant de manière continue un matériau couche après couche. Ces techniques permettent en particulier de fabriquer des objets présentant des formes complexes.

La fabrication additive d'éléments en béton ou mortier permet d'intégrer les processus de conception, de planification et de construction et d'automatiser et rationaliser ce dernier. D'autres avantages de cette technologie sont notamment une réduction du coût de main d'œuvre, une réduction des pertes et de la consommation en matériau, la suppression des coffrages et la réduction de la durée des projets et des investissements.

Dans le présent texte on entend indifféremment par béton ou mortier un matériau comprenant un liant hydraulique et des granulats. Dans les technologies connues, un mortier humide, obtenu en mélangeant un mortier sec et de l'eau de gâchage, est pompé et convoyé vers une tête d'impression solidaire d'un robot ou d'un portique dont le mouvement est contrôlé par ordinateur. Une couche de mortier humide est déposée sur une couche de mortier précédemment déposée, généralement en étant extrudée au travers d'une buse. La tête d'impression est continûment déplacée selon un schéma prédéterminé afin de fabriquer l'objet final.

La fabrication additive a par exemple été employée pour fabriquer des murs en béton en imprimant des parois planes opposées et parallèles entre elles et, à l'intérieur de la cavité ménagée par ces parois, une structure « en zigzag », donc selon une ligne brisée formant des angles alternativement saillants et rentrants, reliant ces deux parois. La structure délimite ainsi une pluralité de cavités séparées les unes des autres par une épaisseur de béton. Le brevet KR 10-1911404, qui divulgue notamment un procédé d'obtention d'un élément de construction en béton par fabrication additive suivant le préambule de la revendication 1, décrit par exemple de tels murs comprenant trois parois reliées chacune à la paroi opposée par une structure en zigzag. La demande de brevet FR3029811 décrit un dispositif et un procédé de fabrication par impression 3D d'éléments industriels de très grandes dimensions, et plus particulièrement de bâtiments.

L'invention vise à fabriquer des éléments de construction sous forme d'un mur, d'un élément de mur ou d'un élément de plancher, présentant à la fois une bonne résistance mécanique, notamment en compression, en flexion et en cisaillement, et de bonnes performances en termes d'isolation thermique.

A cet effet l'invention a pour objet un procédé d'obtention d'un élément de construction en béton par fabrication additive, dans lequel on dépose successivement des couches de mortier superposées de manière à former deux parois, opposées l'une à l'autre de façon à ménager une cavité, ainsi qu'une pluralité d'éléments de renfort s'étendant chacun depuis l'une des parois vers la cavité, chaque élément de renfort n'étant en contact ni avec la paroi opposée à celle depuis laquelle il s'étend ni avec un élément de renfort s'étendant depuis la paroi opposée à celle depuis laquelle il s'étend, ledit élément de construction étant un mur, un élément de mur ou un élément de plancher.

L'invention a aussi par objet un élément de construction en béton obtenu selon le procédé de l'invention, comprenant deux parois opposées l'une à l'autre de façon à ménager une cavité, ainsi qu'une pluralité d'éléments de renfort réalisés de matière avec lesdites parois et s'étendant chacun depuis l'une des parois vers la cavité, chaque élément de renfort n'étant en contact ni avec la paroi opposée à celle depuis laquelle il s'étend ni avec un élément de renfort s'étendant depuis la paroi opposée à celle depuis laquelle il s'étend, ledit élément de construction étant un mur, un élément de mur ou un élément de plancher.

L'élément de construction est un mur, un élément de mur, en particulier pour un mur de façade ou de refend, ou un élément de plancher. L'élément sera généralement destiné à être intégré à la structure d'un bâtiment.

Le dépôt successif de couches de mortier superposées est réalisé de manière à former deux parois et une pluralité d'éléments de renfort. Les éléments de renfort, imprimés avec les parois et donc de matière avec elles, permettent de conférer une bonne résistance mécanique à l'élément de construction ainsi fabriqué. L'élément de construction est de préférence constitué de deux parois opposées et des éléments de renfort, et éventuellement d'un matériau isolant remplissant la cavité.

Dans les murs connus, la structure en zigzag permet également de renforcer le mur, mais il apparaît que cette structure crée des ponts thermiques défavorables entre les parois opposées qu'elle relie. Dans le brevet KR 10-1911404 par exemple, chaque élément de renfort en zigzag est en contact avec des parois opposées deux-à-deux. De manière surprenante, il s'est révélé possible de réduire considérablement ces ponts thermiques en conservant une résistance mécanique du mur acceptable. N'étant en contact ni avec la paroi opposée à celle depuis laquelle ils s'étendent, ni avec un élément de renfort s'étendant depuis ladite paroi opposée, les éléments de renfort ne forment pas de pont thermique. Par « paroi opposée », on entend la paroi immédiatement opposée, c'est à-dire la paroi faisant directement face à celle depuis laquelle l'élément de renfort s'étend. Autrement dit, les éléments de renfort ne sont pas en contact avec la paroi opposée et avec les éléments de renfort s'étendant depuis la paroi opposée, ni directement ni via une paroi supplémentaire ou intermédiaire, puisqu'une telle paroi formerait un pont thermique. D'une manière générale, il ne doit pas être possible de traverser l'élément de construction dans son épaisseur en ne passant que par du mortier, sauf éventuellement aux extrémités latérales de l'élément.

Chaque élément de renfort n'est de préférence en contact qu'avec la paroi depuis laquelle il s'étend. Comme expliqué dans la suite du texte, on n'exclut toutefois pas que les éléments de renfort soient en contact avec un éventuel matériau isolant remplissant la cavité. Un élément de renfort peut aussi être en contact avec un autre élément de renfort qui s'étendrait depuis la même paroi que lui. Dans le présent texte on entend par contact un contact direct.

Contrairement aux murs connus, dans lesquels la structure en zigzag délimite une pluralité de cavités séparées, les éléments de renfort de l'élément de construction selon l'invention sont généralement tels que l'élément de construction ne comprend qu'une unique cavité. Comme indiqué dans la suite du texte, cette cavité peut être remplie par un matériau isolant. La présence d'une seule cavité, outre l'avantage qu'elle procure en termes d'isolation thermique, permet de faciliter le processus de remplissage.

La cavité est normalement telle que l'on peut y tracer une ligne traversant l'ensemble de l'élément de construction dans un plan horizontal (l'élément étant positionné tel qu'il a été imprimé) et dans la direction générale des parois sans traverser de couche de mortier.

De préférence, les parois sont planes et parallèles entre elles. Alternativement, les parois peuvent présenter toutes formes, comme des formes courbes ou encore des lignes brisées.

Les parois présentent de préférence une forme rectangulaire, ayant par conséquent une largeur et une longueur. D'autres formes sont toutefois possibles.

Généralement, du fait de l'emploi de la technique de fabrication additive, qui exige le dépôt de couches superposées, au moins un, notamment chaque, élément de renfort s'étend, dans le plan de la paroi, linéairement et selon une dimension de la paroi. Le plus souvent, chaque élément de renfort présente un profil s'étendant sensiblement selon l'axe normal au plan des couches de mortier. Dans le cas de parois rectangulaires, au moins un, notamment chaque, élément de renfort peut s'étendre, dans le plan de la paroi, selon la largeur ou selon la longueur des parois. Dans son utilisation finale, l'élément de mur peut être placé de sorte que sa largeur ou sa longueur soit disposée verticalement, de sorte que les éléments de renfort pourront s'étendre verticalement ou horizontalement.

La forme et la répartition des éléments de renfort influent sur la résistance mécanique et les propriétés d'isolation thermique de l'élément de construction obtenu.

De préférence, chaque élément de renfort possède une forme identique. Alternativement, l'élément de construction peut comprendre des éléments de renfort ayant des formes différentes.

Les éléments de renfort peuvent être disposés périodiquement ou non.

Selon un mode de réalisation avantageux, au moins un, notamment chaque, élément de renfort comprend une première partie s'étendant linéairement depuis l'une des parois et transversalement auxdites parois. L'angle α formé par cette première partie et par la paroi est de préférence compris entre 75 et 105°, notamment entre 80 et 100°, voire entre 85 et 95°. Cet angle est avantageusement un angle droit. Lorsque la paroi n'est pas plane, l'angle peut être mesuré en prenant en compte le plan tangent à la paroi dans la zone à partir de laquelle l'élément s'étend.

Dans la direction d'extension de la première partie (transversalement aux parois), le rapport entre la longueur de cette première partie et la distance entre les parois est de préférence compris entre 0,2 et 0,8, notamment entre 0,3 et 0,7.

Selon ce mode, au moins un, notamment chaque, élément de renfort peut former une aile en saillie par rapport à la paroi depuis laquelle il s'étend. L'aile peut notamment présenter un profil rectangulaire.

Au moins un, notamment chaque élément de renfort, peut comprendre en outre une deuxième partie linéaire s'étendant depuis la première partie et transversalement à celle-ci. L'élément de renfort peut par exemple présenter un profil en T ou en L. Le rapport entre la longueur de cette deuxième partie et la distance entre les parois est de préférence compris entre 0,1 et 0,7, notamment entre 0,2 et 0,6. Par « transversalement » on n'entend pas nécessairement l'angle entre la première et la deuxième partie est un angle droit. L'angle β entre la première et la deuxième partie est de préférence compris entre 70 et 110°, notamment entre 80 et 100°. Il peut être un angle droit, comme dans le cas d'éléments ayant un profil en L ou en T.

Selon un autre mode de réalisation, au moins un, notamment chaque, élément de renfort forme une courbe refermée, notamment sur elle-même, au niveau d'une des parois, délimitant au moins une alvéole. Dans ce cas, l'élément de mur comporte plusieurs cavités : la cavité unique délimitée par les parois et les alvéoles situées à l'intérieur des éléments de renfort.

De préférence, afin d'optimiser la résistance mécanique de l'élément de construction, et ce quelle que soit la forme des éléments de renfort, deux éléments de renfort consécutifs s'étendent à partir de deux parois différentes. L'élément de construction comprend alors une pluralité d'éléments de renfort s'étendant en alternance depuis chacune des parois.

Dans le plan d'une des parois, le rapport entre la distance entre deux éléments de renfort consécutifs s'étendant depuis la paroi concernée et la distance entre les parois est de préférence compris entre 0,5 et 10, notamment entre 2 et 8.

Afin d'assurer un bon compromis entre la thermique et la mécanique, le nombre d'élément de renfort par mètre linéaire d'élément de construction est de préférence compris entre 1 et 5, notamment entre 1 et 4, voire entre 2 et 3 (bornes comprises).

Selon un autre mode de réalisation, l'élément de construction comprend deux éléments de renfort disposés chacun le long d'une des parois, et de préférence sur toute la longueur desdites parois, et formant un motif périodique, par exemple sinusoïdal ou en lignes brisées, délimitant ainsi une pluralité d'alvéoles.

En coupe dans un plan transversal aux parois, autrement dit dans le plan des couches de mortier, l'épaisseur des parois est de préférence comprise entre 10 et 200 mm, notamment entre 40 et 120 mm. L'épaisseur des éléments de structure est de préférence comprise entre 20 et 100 cm, notamment entre 30 et 80 cm.

Les dimensions latérales de l'élément de construction sont de préférence comprises entre 1 et 4 m, notamment entre 1 et 3 m.

Le mortier comprend de préférence un liant hydraulique et des granulats.

Le mortier humide, de consistance pâteuse, est formé par gâchage avec de l'eau d'un mortier sec. Par mortier sec on entend un mélange pulvérulent. Après prise et durcissement, le mortier final est appelé mortier durci, ou encore « béton ».

Le liant hydraulique est de préférence choisi parmi les ciments Portland, les ciments alumineux, les ciments sulfoalumineux, la chaux hydratée, les laitiers de haut fourneau granulés broyés, les cendres volantes et leurs mélanges. Le liant hydraulique comprend de préférence un ciment Portland. Il est avantageusement constitué de ciment Portland.

Les granulats sont de préférence choisis parmi les granulats siliceux, calcaires, dolomitiques et les mélanges de ces derniers. La taille maximale des granulats est de préférence d'au plus 3 mm, notamment d'au plus 2 mm et même d'au plus 1 mm, compte tenu de la section réduite du dispositif de pompage et de la buse de la tête d'impression.

Le mortier sec comprend de préférence au moins un additif, notamment choisi parmi les superplastifiants, les épaississants, les accélérateurs et les retardateurs. Le mortier sec comprend avantageusement des épaississants inorganiques, par exemple des argiles gonflantes, capables d'augmenter la limite d'élasticité au repos du mortier humide. Les accélérateurs et retardateurs permettent d'ajuster le temps nécessaire à la prise et au durcissement du liant hydraulique.

La composition du mortier sec est de préférence ajustée de sorte que le mortier humide présente un comportement thixotrope. De préférence, la viscosité du mortier humide augmente d'un facteur d'au moins 50 seulement une seconde après que le mortier humide a quitté la buse d'impression. Le mortier humide présente alors une faible viscosité pour de forts taux de cisaillement de sorte qu'il peut être facilement pompé et convoyé, mais présente une augmentation immédiate de sa stabilité structurelle dès qu'il quitte la buse de la tête d'impression, permettant ainsi de supporter les couches sus-jacentes avant prise et durcissement. Ce dépôt sur couche de mortier encore humide permet d'améliorer l'adhésion entre les couches successives, et donc la résistance mécanique finale de l'élément de mur. Par contraste, les procédés habituels utilisent des accélérateurs permettant d'accélérer fortement la prise et le durcissement du mortier de manière à déposer sur des couches d'un mortier qui a déjà pris ou durci, ce qui permet d'assurer une stabilité dimensionnelle pendant l'impression mais au détriment de l'adhésion entre les couches successives.

Le procédé comprend le dépôt successif de couches de mortier superposées. Comme indiqué précédemment, les couches sont de préférence déposées sur une couche sous-jacente qui n'a pas encore pris ou n'a pas encore durci.

Le procédé comprend de préférence une étape de mélange d'une composition de mortier sec avec de l'eau afin d'obtenir un mortier humide, de consistance pâteuse. Le mortier humide est de préférence pompé et acheminé, généralement dans un tuyau, vers la tête d'impression d'une imprimante. La tête d'impression comprend notamment une buse à travers laquelle le mortier humide est extrudé. L'imprimante est par exemple un robot industriel ou un portique, portant la tête d'impression, et dont le mouvement est piloté par un ordinateur. L'ordinateur comprend notamment un support d'enregistrement dans lequel est stocké un ensemble de données ou modèle 3D ainsi que des instructions, qui lorsqu'elles sont exécutées par l'ordinateur conduisent ce dernier à contrôler le déplacement (trajectoire, vitesse...) de la tête d'impression.

La vitesse d'impression est typiquement de 30 à 1000 mm/s, notamment de 50 à 300 mm/s. L'épaisseur (ou hauteur, puisqu'il s'agit ici de la dimension dans la direction verticale) des couches de mortier humide est de préférence comprise entre 5 et 40 mm, notamment entre 10 et 20 mm. La largeur des couches de mortier est de préférence comprise entre 10 et 100 mm, notamment entre 20 et 60 mm.

Comme expliqué plus en détail dans la suite du texte, pour chaque couche l'imprimante peut déposer d'abord une bande de mortier, appelée bande externe, formant l'enveloppe extérieure de l'élément de mur, puis une bande interne adjacente à la bande externe et en contact avec elle, qui comporte des portions parallèles à la bande externe, formant avec cette dernière les parois, et des portions s'étendant vers la cavité, formant les éléments de renfort.

De préférence, le procédé comprend en outre une étape de remplissage de la cavité (ou d'au moins une partie de la cavité) par un matériau isolant. Dans le cas où les éléments de renfort délimitent des alvéoles, ces dernières peuvent également être remplies par le matériau isolant, lors de la même étape ou d'une étape ultérieure.

Le matériau isolant peut par exemple être minéral ou organique.

Le matériau isolant est avantageusement choisi parmi les mousses minérales, les mousses organiques, les laines minérales, les mortiers comprenant un liant minéral et des granulats légers et les isolants à base de matériaux naturels, notamment à base de fibres naturelles (végétales ou animales).

Le procédé de remplissage est adapté en fonction du matériau choisi et peut mettre en oeuvre selon les cas l'écoulement, l'injection ou encore la projection d'un matériau pâteux ou granulaire, ou la projection de composés précurseurs du matériau, lequel se forme *in situ* à l'intérieur de la cavité. Le procédé de remplissage peut être mis en oeuvre par un robot, le cas échéant par le même robot que celui qui réalise l'impression 3D.

Les mousses minérales sont notamment des mousses de silice ou des mousses à base de liant hydraulique, par exemple des mousses de ciment, de mortier ou de béton. Ces dernières peuvent notamment être obtenues par mélange de mortier ou béton humide avec une mousse aqueuse. Dans un tel cas, l'étape de remplissage met de préférence en oeuvre l'écoulement de la mousse minérale à l'état pâteux à l'intérieur de la cavité. La mousse peut ensuite durcir à l'intérieur de la cavité. L'étape de remplissage peut être réalisée avant durcissement de l'élément de mur, notamment simultanément avec la fabrication de l'élément de mur, ou après durcissement de l'élément de mur. Après durcissement, la mousse minérale présente de préférence une masse volumique inférieure à 200 kg/m³, notamment inférieure à 150 kg/m³, voire même inférieure à 100 kg/m³. La mousse de béton peut notamment être la mousse commercialisée sous la référence Airium par la société LafargeHolcim.

Les mousses organiques sont par exemple des mousses de polyuréthane ou de polyisocyanurate. De telles mousses peuvent être formées *in situ* à l'intérieur de la cavité, l'étape de remplissage mettant alors en oeuvre la projection simultanée d'un composé isocyanate et d'un alcool à l'intérieur de la cavité.

Les laines minérales sont notamment des laines de verre, des laines de roche ou encore des laines de laitier. Il peut notamment s'agir de laines à souffler (ou laines en vrac), c'est-à-dire se présentant sous forme de flocons. Dans ce cas, l'étape de remplissage met en oeuvre la projection desdits flocons à l'intérieur de la cavité. Les laines minérales peuvent être combinées avec un liant hydraulique, notamment cimentaire.

Les mortiers comprenant un liant minéral et des granulats légers permettent également de conférer des propriétés isolantes. Le liant minéral est de préférence un liant hydraulique, par exemple un ciment Portland. Les granulats légers présentent de préférence une masse volumique d'au plus 200 kg/m³. Les granulats légers sont de préférence choisis parmi les billes de polystyrène expansé, les aérogels, la perlite, les billes de verre expansé, la vermiculite, les argiles expansées, le liège et les cénosphères.

Les isolants à base de matériaux naturels sont notamment à base de matériaux cellulosiques (liège, fibres de bois, fibres de cellulose...) ou à base de laines animales (laine de mouton...) .

Quel que soit le procédé employé, la présence d'une unique cavité peut simplifier l'étape de remplissage, permettant par exemple le recours à une seule buse de remplissage éventuellement fixe plutôt que de devoir utiliser soit une buse par cavité soit une buse mobile devant être déplacée pour remplir successivement les cavités.

Lorsqu'il présente une adhésion avec le mortier constituant les parois et les éléments de renfort, le matériau isolant peut jouer un rôle structurel et ainsi améliorer les propriétés mécaniques de l'élément de construction. C'est le cas par exemple lorsque le matériau isolant comprend un liant minéral, notamment hydraulique. Le procédé selon l'invention peut alors comprendre une étape de découpe des extrémités latérales de l'élément. On peut ainsi enlever les bords en béton formés lors de l'impression et améliorer les performances thermiques de l'élément de mur.

L'élément de construction peut également comprendre des pièces de renfort qui ne sont pas de matière avec les parois et qui peuvent s'étendre entre ces parois. Ces pièces peuvent notamment être fixées mécaniquement aux parois après ou pendant la fabrication de l'élément de construction. Elles seront de préférence en matière polymérique afin de limiter les ponts thermiques.

Les éléments de construction peuvent être des éléments préfabriqués, destinés à être assemblés sur le chantier de construction, par exemple au moyen d'un mortier, afin de former les murs extérieurs ou intérieurs (par exemple les murs de refend) d'un bâtiment. Les éléments peuvent aussi être fabriqués directement sur le chantier de construction et former le mur complet du bâtiment.

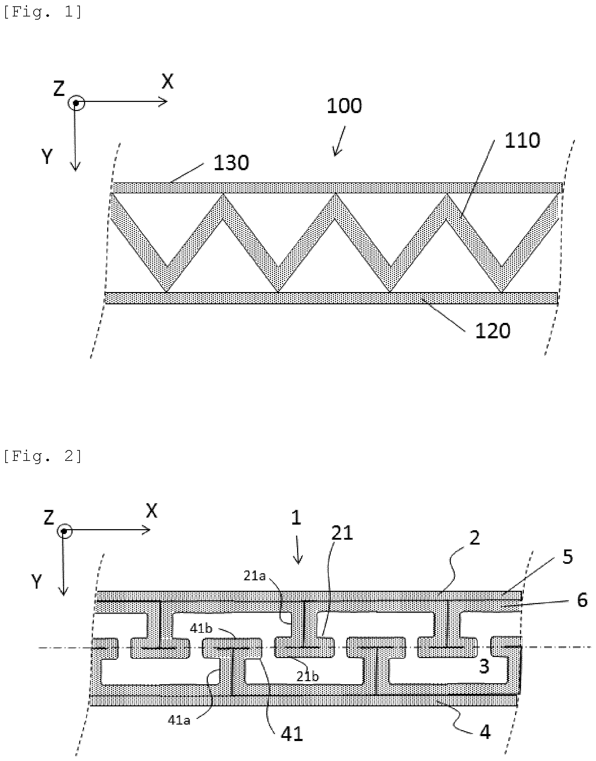

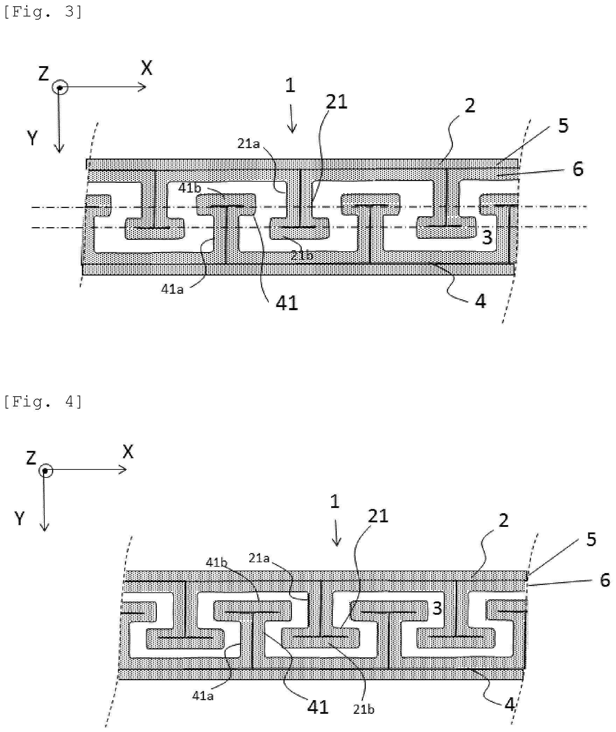

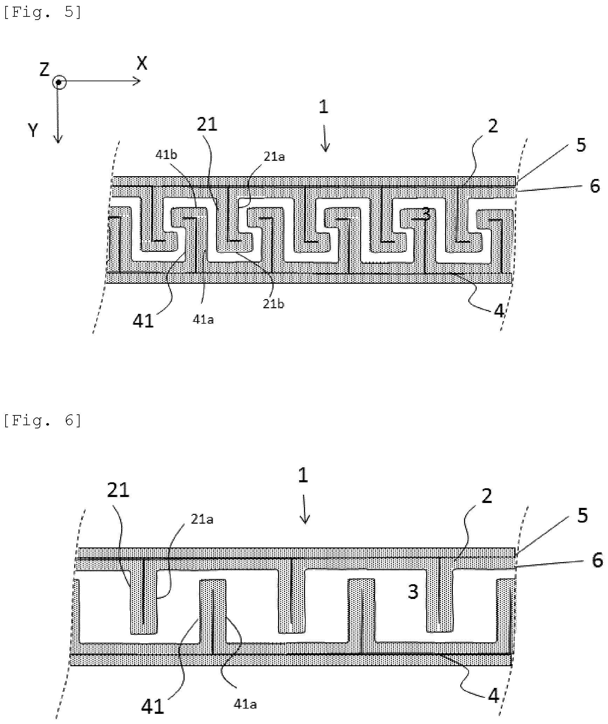

L'invention et ses avantages seront mieux compris à l'aide de la description qui suit, en référence aux figures 1 à 10 annexées, d'exemples non-limitatifs d'éléments de construction. Il s'agit en l'espèce d'éléments de mur.

Les éléments de mur exemplifiés ici sont des éléments parallélépipédiques rectangles comprenant deux parois planes parallèles entre elles s'étendant selon un plan XZ, aussi appelé « plan des parois ». On qualifie dans le présent texte de « plan des parois » tout plan parallèle au plan XZ. L'axe Y est l'axe orthogonal au plan des parois. L'axe Z est l'axe orthogonal au plan des couches (plan XY).

Les figures 1 à 10 représentent une partie de ces éléments en coupe selon le plan XY afin d'illustrer différentes exemples d'éléments de renfort. Les extrémités des éléments ne sont pas représentées : lors de l'impression les extrémités forment par exemple un retour selon l'axe Y reliant les deux parois. Comme indiqué précédemment, ces extrémités peuvent dans certains cas être découpées, et donc ne plus être présentes dans l'élément de mur final.

Dans tous les cas représentés, les éléments de renfort s'étendent linéairement, dans le plan des parois, selon l'axe Z (normal au plan des couches). Autrement dit, les éléments de renfort sont des cylindres de génératrice Z. La position et la forme d'un élément de renfort selon l'axe X ne dépend pas de la hauteur selon l'axe Z. La technique de fabrication additive autorise toutefois des conceptions légèrement différentes : les éléments de renfort peuvent par exemple ne s'étendre que sur une partie de la hauteur des parois (selon l'axe Z) et/ou la position des éléments de renfort selon l'axe X ou la forme des éléments de renfort peut dépendre de la hauteur selon l'axe Z.

Dans tous les cas représentés, les éléments de renfort sont disposés de manière périodique. Il est toutefois possible de procéder autrement, la méthode de fabrication additive étant à même de réaliser les géométries les plus variées et les plus complexes.

La largeur de l'élément de mur complet, selon l'axe X, est par exemple comprise entre 1 et 3 m. La hauteur de l'élément de mur, selon l'axe Z, est par exemple comprise entre 1 et 3 m. L'épaisseur de l'élément de mur, selon l'axe Y, est par exemple comprise entre 20 et 100 cm, notamment entre 30 et 80 cm.

[Fig. 1] illustre une partie d'un élément de mur 100 selon l'art antérieur, qui comprend un seul élément de renfort 110 selon une ligne brisée formant des angles alternativement saillants et rentrants et reliant les deux parois 120 et 130. La fabrication de ce type d'élément de mur est généralement réalisée en imprimant, pour une couche donnée, d'abord les parois 120 et 130 (ainsi que les bords latéraux non représentés) puis l'élément de renfort 110 et en répétant cette étape. Le brevet KR 10-1911404 décrit une variante de ce type de murs, dans laquelle cette structure est doublée, le mur comprenant alors trois parois et deux éléments de renfort en zigzag reliant chacun deux parois opposées.

[Fig. 2] représente une partie d'un élément de mur 1 selon un mode de réalisation de l'invention.

Cet élément comprend une première paroi 2 et une deuxième paroi 4 ménageant une cavité 3. Dans l'exemple illustré, la section de chaque paroi dans un plan de coupe XY est formée par deux bandes de mortiers adjacentes, une bande extérieure 5 et une bande intérieure 6. Pour une couche donnée (un niveau donné selon l'axe Z), l'imprimante se déplace dans le plan XY et peut par exemple d'abord imprimer la bande extérieure 5 (y compris les extrémités non représentées), qui forme le contour externe de l'élément de mur, puis, à l'intérieur de la zone définie par la bande extérieure 5, la bande intérieure 6. Cette bande intérieure 6 comprend des parties s'étendant selon l'axe X, qui ensemble font partie de la paroi, et des parties qui s'étendent depuis les parois dans la direction Y, autrement dit les éléments de renfort.

L'élément de mur comprend une pluralité d'éléments de renfort 21, 41 présentant chacun un profil en T et s'étendant depuis l'une des parois 2, 4, vers la cavité 3. Chaque élément de renfort comprend une première partie linéaire 21a, 41a s'étendant depuis une paroi 2, 4 dans le plan YZ (orthogonal au plan des parois) ainsi qu'une deuxième partie linéaire 21b, 41b s'étendant depuis la première partie 21a, 41a dans le plan XZ, donc dans un plan parallèle au plan des parois.

La pluralité d'éléments de renfort comprend une première pluralité d'éléments de renfort 21 s'étendant à partir de la première paroi 2 et une deuxième pluralité d'éléments de renfort 41 s'étendant à partir de la deuxième paroi 4. Les éléments de renfort sont disposés en alternance, chaque élément de renfort d'une parmi la première et la deuxième pluralité étant directement encadré par deux éléments de renfort de l'autre pluralité.

Dans l'exemple représenté, les branches transversales des T (deuxièmes parties 21b et 41b) sont toutes dans un même plan, ici le plan médian des deux parois, schématisé par un trait en pointillé.

Les éléments de renfort ne sont en contact qu'avec la paroi depuis laquelle ils s'étendent. Comme illustré sur la figure, ils ne sont en contact ni avec l'autre paroi, ni avec aucun autre élément de renfort.

[Fig .3] représente une variante, dans laquelle les branches transversales des T sont dans deux plans différents, parallèles aux plans des parois. Plus précisément, les branches transversales des éléments de renfort 21b, 41b de la première (21), respectivement deuxième (41), pluralité d'éléments de renfort sont dans un premier plan, respectivement deuxième plan, parallèle au plan des parois.

[Fig. 4] représente encore une autre variante, dans laquelle les branches transversales des T (21b et 41b) sont allongées, de sorte que les branches transversales 21b des premiers éléments de renfort 21 sont partiellement en regard des branches 41b des deuxièmes éléments de renfort 41 adjacents.

[Fig. 5] illustre une autre variante, dans laquelle les éléments de renfort 21 et 41 présentent un profil en L. Chaque élément de renfort comprend donc une première partie (21a, 41a) et une deuxième partie (21b, 41b), la deuxième partie formant un retour de la première partie.

[Fig. 6] représente une variante dans laquelle les éléments de renfort 21 et 41 forment des ailes linéaires en saillie depuis les parois. Chaque élément de renfort ne comprend ici qu'une première partie linéaire (21a, 41a), autrement dit présente un profil en I.

[Fig. 7] représente une variante dans laquelle chaque élément de renfort 22 et 42 forme une courbe refermée sur elle-même au niveau de la paroi à partir de laquelle il s'étend, délimitant de ce fait une alvéole.

Dans les différentes variantes présentées, les éléments de renfort sont disposés en alternance, chaque élément de renfort d'une parmi la première et la deuxième pluralité étant directement encadré par deux éléments de renfort de l'autre pluralité.

[Fig. 8] illustre un autre mode de réalisation dans lequel l'élément de mur ne comprend que deux éléments de renfort, un premier élément de renfort 22 disposé le long de la première paroi 2, et un deuxième élément de renfort 42 disposé le long de la deuxième paroi 4. Le premier élément de renfort 22 forme un motif périodique, ici sinusoïdal, faisant face au deuxième élément de renfort 42.

[Fig. 9] illustre une variante du mode de réalisation de la figure 8, dans laquelle les deux motifs périodiques sont décalés d'une demi-période.

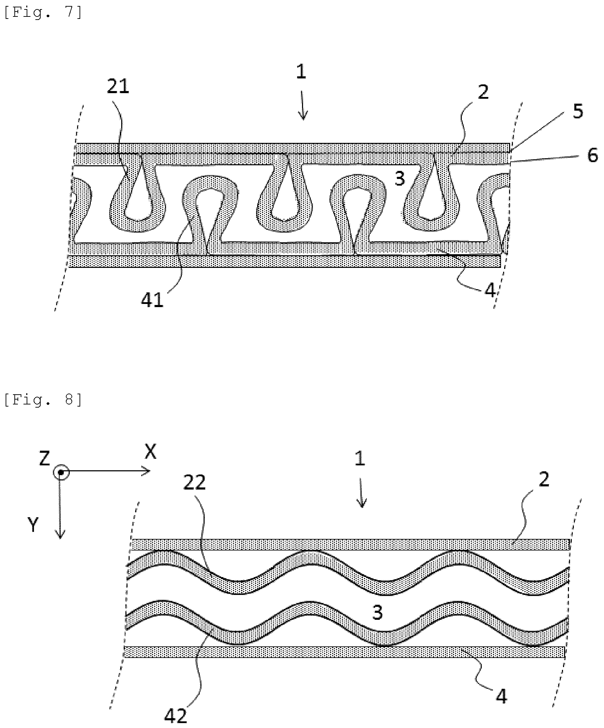

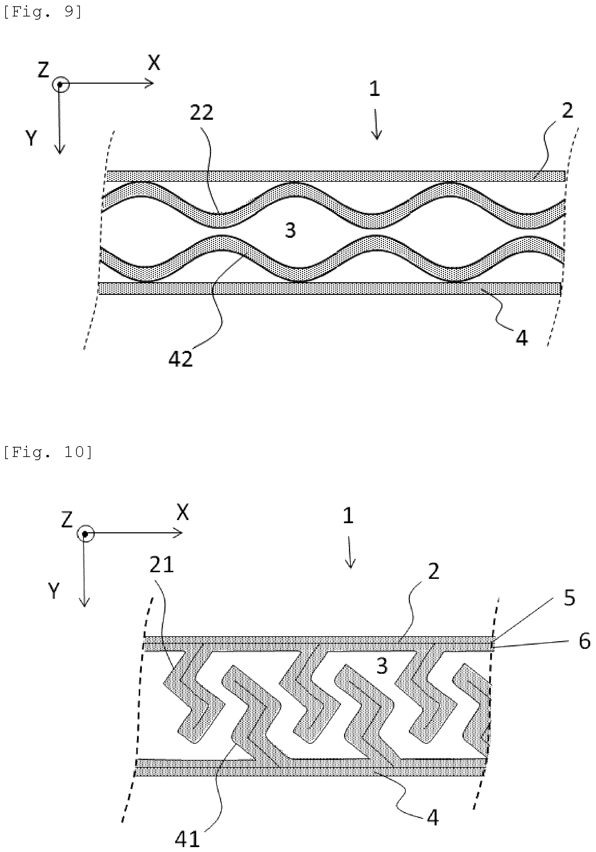

Dans le mode de réalisation des figures 8 et 9, l'imprimante peut par exemple, dans le plan XY, d'abord imprimer les parois 2 et 4, qui forment le contour externe de l'élément de mur, puis, à l'intérieur de la zone définie par ces parois, les éléments de renfort 22 et 42.

[Fig. 10] illustre une variante dans laquelle les éléments de renfort 21 et 41 sont constitués d'une succession de lignes brisées.

Des simulations numériques ont permis de comparer la conductivité thermique équivalente d'éléments de mur selon l'invention (géométrie du type de celle représentée en figure 2) avec celle d'un élément de mur selon l'art antérieur (géométrie en zigzag, du type de celle représentée en figure 1). Selon les cas les cavités étaient remplies avec une mousse de polyuréthane (conductivité thermique de 22 mW.m-¹.K⁻¹) ou avec de la laine de verre (conductivité thermique de 35 mW.m⁻¹.K⁻¹). Le mortier durci possède quant à lui une conductivité thermique de 750 mW.m⁻¹.K⁻¹.

Dans le cas du mur selon l'art antérieur, la conductivité thermique équivalente était de 200 mW.m⁻¹.K⁻¹ avec un remplissage en mousse de polyuréthane et de 220 mW.m-¹.K⁻¹ avec un remplissage en laine de verre.

Dans le cas du mur selon l'invention, la conductivité thermique équivalente était respectivement de 100 mW.m⁻¹.K⁻¹ et 140 mW.m⁻¹.K⁻¹.

## Revendications

1. Procédé d'obtention d'un élément de construction en béton (1) par fabrication additive, dans lequel on dépose successivement des couches de mortier superposées de manière à former deux parois (2, 4), opposées l'une à l'autre de façon à ménager une cavité (3), ainsi qu'une pluralité d'éléments de renfort (21, 41, 22, 42) s'étendant chacun depuis l'une des parois (2, 4) vers la cavité (3), ledit élément de construction étant un mur, un élément de mur ou un élément de plancher, **caractérisé en ce que** chaque élément de renfort n'est en contact ni avec la paroi opposée à celle depuis laquelle il s'étend ni avec un élément de renfort s'étendant depuis la paroi opposée à celle depuis laquelle il s'étend.

2. Procédé selon la revendication 1, dans lequel au moins un élément de renfort (21, 41) comprend une première partie (21a, 41a) s'étendant linéairement depuis l'une des parois et transversalement auxdites parois (2, 4).

3. Procédé selon la revendication précédente, dans lequel au moins un élément de renfort (21, 41) comprend en outre une deuxième partie linéaire (21b, 41b) s'étendant depuis la première partie (21a, 41a) et transversalement à celle-ci.

4. Procédé selon la revendication précédente, dans lequel au moins un élément de renfort (21, 41) présente un profil en T ou en L.

5. Procédé selon la revendication 1, dans lequel chaque élément de renfort (21, 41) forme une courbe refermée au niveau d'une des parois, délimitant au moins une alvéole.

6. Procédé selon la revendication précédente, dans lequel la courbe est refermée sur elle-même.

7. Procédé selon l'une des revendications précédentes, dans lequel deux éléments de renfort (21, 41) consécutifs s'étendent à partir de deux parois différentes (2, 4).

8. Procédé selon la revendication précédente, tel que dans le plan d'une paroi (21, 41), le rapport entre la distance entre deux éléments de renfort consécutifs (21, 41) s'étendant depuis cette paroi et la distance entre les parois (2, 4) est de préférence compris entre 0,5 et 10, notamment entre 2 et 8.

9. Procédé selon l'une des revendications 7 ou 8, tel que le nombre d'élément de renfort par mètre linéaire d'élément de construction est compris entre 1 et 5, notamment entre 1 et 4.

10. Procédé selon l'une des revendications précédentes, comprenant en outre une étape de remplissage de la cavité par un matériau isolant.

11. Procédé selon la revendication précédente, dans lequel le matériau isolant est choisi parmi les mousses minérales, les mousses organiques, les laines minérales, les mortiers comprenant un liant minéral et des granulats légers et les isolants à base de matériaux naturels.

12. Procédé selon l'une des revendications précédentes, tel que chaque élément de renfort (21, 41, 22, 42) n'est en contact qu'avec la paroi (2, 4) depuis laquelle il s'étend, et le cas échéant avec un matériau isolant remplissant la cavité (3).

13. Procédé selon l'une des revendications précédentes, tel que l'élément de construction (1) ne comprend qu'une unique cavité (3).

14. Procédé selon l'une des revendications 1,10 ou 11, tel que l'élément de construction (1) comprend deux éléments de renfort (22, 42) disposés chacun le long d'une des parois (2, 4) et formant un motif périodique, par exemple sinusoïdal ou en lignes brisées, délimitant ainsi une pluralité d'alvéoles.

15. Elément de construction en béton (1) obtenu selon le procédé de l'une des revendications précédentes, comprenant deux parois (2, 4), opposées l'une à l'autre de façon à ménager une cavité (3), ainsi qu'une pluralité d'éléments de renfort (21, 41, 22, 42) réalisés de matière avec lesdites parois (2, 4) et s'étendant chacun depuis l'une des parois (2, 4) vers la cavité (3), chaque élément de renfort (21, 41, 22, 42) n'étant en contact ni avec la paroi (2, 4) opposée à celle depuis laquelle il s'étend ni avec un élément de renfort (21, 41, 22, 42) s'étendant depuis la paroi opposée (2, 4) à celle depuis laquelle il s'étend, ledit élément de construction étant un mur, un élément de mur ou un élément de plancher.

16. Elément de construction en béton (1) selon la revendication précédente, dont la cavité (3) est remplie par un matériau isolant.

## Patentansprüche

1. Verfahren zum Erhalten eines Betonbauelements (1) durch additive Fertigung, wobei Mörtelschichten nacheinander aufgetragen werden, die übereinandergelegt sind, um zwei einander gegenüberliegende Wände (2, 4) auszubilden, um einen Hohlraum (3) bereitzustellen, sowie eine Vielzahl von Verstärkungselementen (21, 41, 22, 42), die sich jeweils von einer der Wände (2, 4) in Richtung des Hohlraums (3) erstrecken,
wobei das Bauelement eine Mauer, ein Mauerelement oder ein Bodenelement ist, **dadurch gekennzeichnet, dass** jedes Verstärkungselement weder mit der Wand gegenüber derjenigen, von der es sich erstreckt, noch mit einem Verstärkungselement in Kontakt steht, das sich von der Wand gegenüber derjenigen erstreckt, von der es sich erstreckt.

2. Verfahren nach Anspruch 1, wobei mindestens ein Verstärkungselement (21, 41) einen ersten Teil (21a, 41a) umfasst, der sich von einer der Wände und quer zu den Wänden (2, 4) linear erstreckt.

3. Verfahren nach dem vorstehenden Anspruch, wobei mindestens ein Verstärkungselement (21, 41) ferner einen zweiten linearen Teil (21b, 41b) umfasst, der sich von dem ersten Teil (21a, 41a) und quer dazu erstreckt.

4. Verfahren nach dem vorstehenden Anspruch, wobei mindestens ein Verstärkungselement (21, 41) ein T- oder L-Profil aufweist.

5. Verfahren nach Anspruch 1, wobei jedes Verstärkungselement (21, 41) an einer der Wände eine geschlossene Kurve ausbildet, die mindestens eine Zelle begrenzt.

6. Verfahren nach dem vorstehenden Anspruch, wobei die Kurve in sich selbst geschlossen ist.

7. Verfahren nach einem der vorstehenden Ansprüche, wobei sich zwei aufeinanderfolgende Verstärkungselemente (21, 41) aus zwei unterschiedlichen Wänden (2, 4) erstrecken.

8. Verfahren nach dem vorstehenden Anspruch, derart, dass in der Ebene einer Wand (21, 41) das Verhältnis zwischen dem Abstand zwischen zwei aufeinanderfolgenden Verstärkungselementen (21, 41), die sich von dieser Wand erstrecken, und dem Abstand zwischen den Wänden (2, 4) vorzugsweise zwischen 0,5 und 10, insbesondere zwischen 2 und 8 liegt.

9. Verfahren nach einem der Ansprüche 7 oder 8, derart, dass die Anzahl von Verstärkungselementen pro Laufmeter Bauelement zwischen 1 und 5, insbesondere zwischen 1 und 4 beträgt.

10. Verfahren nach einem der vorstehenden Ansprüche, ferner umfassend einen Schritt eines Füllens des Hohlraums mit einem Isolierstoff.

11. Verfahren nach dem vorstehenden Anspruch, wobei der Isolierstoff aus Mineralschäumen, organischen Schäumen, Mineralwollen, Mörteln umfassend ein mineralisches Bindemittel und leichtes Granulat, und Isolatoren auf Basis natürlicher Materialien ausgewählt wird.

12. Verfahren nach einem der vorstehenden Ansprüche, derart, dass jedes Verstärkungselement (21, 41, 22, 42) nur mit der Wand (2, 4), von der es sich erstreckt, und gegebenenfalls mit einem Isolierstoff in Kontakt steht, der den Hohlraum (3) füllt.

13. Verfahren nach einem der vorstehenden Ansprüche, derart, dass das Bauelement (1) nur einen einzigen Hohlraum (3) umfasst.

14. Verfahren nach einem der Ansprüche 1,10 oder 11, derart, dass das Bauelement (1) zwei Verstärkungselemente (22, 42) umfasst, die jeweils entlang einer der Wände (2, 4) angeordnet sind und ein periodisches Muster ausbilden, beispielsweise ein sinusförmiges oder aus gestrichelten Linien, wobei so eine Vielzahl von Zellen begrenzt wird.

15. Betonbauelement (1), das nach dem Verfahren nach einem der vorstehenden Ansprüche erhalten wird, umfassend zwei einander gegenüberliegende Wände (2, 4), um einen Hohlraum (3) bereitzustellen, sowie eine Vielzahl von Verstärkungselementen (21, 41, 22, 42), die einstückig mit den Wänden (2, 4) hergestellt sind und sich jeweils von einer der Wände (2, 4) in Richtung des Hohlraums (3) erstrecken, wobei jedes Verstärkungselement (21, 41, 22, 42) weder mit der Wand (2, 4) gegenüber derjenigen, von der es sich erstreckt, noch mit einem Verstärkungselement (21, 41, 22, 42) in Kontakt steht, das sich von der Wand (2, 4) gegenüber derjenigen erstreckt, von der es sich erstreckt, wobei das Bauelement eine Mauer, ein Mauerelement oder ein Bodenelement ist.

16. Betonbauelement (1) nach dem vorstehenden Anspruch, dessen Hohlraum (3) mit einem Isolierstoff gefüllt ist.

## Claims

1. A method for obtaining a concrete construction element (1) by additive manufacturing, wherein superposed mortar layers are successively deposited so as to form two wall surfaces (2, 4), opposite one another, so as to form a cavity (3), as well as a plurality of reinforcement elements (21, 41, 22, 42) each extending from one of the wall surfaces (2, 4) toward the cavity (3), said construction element being a wall, a wall element or a floor element, **characterized in that** each reinforcement element is in contact with neither the wall surface opposite to that from which it extends, nor with a reinforcement element extending from the opposite wall surface to that from which it extends.

2. The method according to claim 1, wherein at least one reinforcement element (21, 41) comprises a first part (21a, 41a) extending linearly from one of the wall surfaces and transversely to said wall surfaces (2, 4).

3. The method according to the preceding claim, wherein at least one reinforcement element (21, 41) further comprises a second linear part (21b, 41b) extending from the first part (21a, 41a) and transversely thereto.

4. The method according to the preceding claim, wherein at least one reinforcement element (21, 41) has a T-shaped or L-shaped profile.

5. The method according to claim 1, wherein each reinforcement element (21, 41) forms a curve closed at one of the wall surfaces, delimiting at least one cell.

6. The method according to the preceding claim, wherein the curve is closed on itself.

7. The method according to one of the preceding claims, wherein two consecutive reinforcement elements (21, 41) extend from two different wall surfaces (2, 4).

8. The method according to the preceding claim, such that, in the plane of a wall surface (21, 41), the ratio of the distance between two consecutive reinforcement elements (21, 41) extending from this wall surface to the distance between the wall surfaces (2, 4) is preferably between 0.5 and 10, especially between 2 and 8.

9. The method according to one of claims 7 or 8, such that the number of reinforcement elements per linear meter of construction element is between 1 and 5, especially between 1 and 4.

10. The method according to one of the preceding claims, further comprising a step of filling the cavity with an insulating material.

11. The method according to the preceding claim, wherein the insulating material is selected from mineral foams, organic foams, mineral wools, mortars comprising a mineral binder and lightweight aggregates and insulators based on natural materials.

12. The method according to one of the preceding claims, such that each reinforcement element (21, 41, 22, 42) is only in contact with the wall surface (2, 4) from which it extends, and where appropriate with an insulating material which fills the cavity (3).

13. The method according to one of the preceding claims, such that the construction element (1) only comprises a single cavity (3).

14. The method according to one of claims 1, 10 or 11, such that the construction element (1) comprises two reinforcement elements (22, 42) each arranged along one of the wall surfaces (2, 4) and forming a regular pattern, for example sinusoidal or broken lines, thereby delimiting a plurality of cells.

15. A concrete construction element (1) obtained according to the method of one of the preceding claims, comprising two wall surfaces (2, 4), opposite one another, so as to form a cavity (3), as well as a plurality of reinforcement elements (21, 41, 22, 42) produced integrally with said wall surfaces (2, 4) and each extending from one of the wall surfaces (2, 4) toward the cavity (3), each reinforcement element (21, 41, 22, 42) being in contact with neither the wall surface (2, 4) opposite to that from which it extends, nor with a reinforcement element (21, 41, 22, 42) extending from the opposite wall surface (2, 4) to that from which it extends, said construction element being a wall, a wall element or a floor element.

16. The concrete construction element (1) according to the preceding claim, the cavity (3) of which is filled with an insulating material.
